# EUROPÄISCHE PATENTSCHRIFT

(11) **EP 2 122 008 B1**
(45) Veröffentlichungstag und Bekanntmachung des Hinweises auf die Patenterteilung: **14.07.2010**
(21) Anmeldenummer: 08716875.3
(22) Anmeldetag: 15.02.2008
(51) Int. Cl.: C09D 7/12, C09D 11/02

(54) **FEINSTE INTERFERENZPIGMENTE ENTHALTENDE GLASSCHICHTEN AUF METALL-, GLAS- UND KERAMIKOBERFLÄCHEN UND VERFAHREN ZU DEREN HERSTELLUNG**
FINE INTERFERENCE PIGMENTS CONTAINING GLASS LAYERS ON METAL GLASS AND CERAMIC SURFACES AND METHOD FOR PRODUCTION THEREOF
COUCHES DE VERRES RENFERMANT DES PIGMENTS D'INTERFÉRENCE EXTRÊMEMENT FINS SUR DES SURFACES MÉTALLIQUES, EN VERRE OU EN CÉRAMIQUE, ET LEUR PROCÉDÉ DE PRODUCTION

(30) Priorität: 15.02.2007 DE 102007007526
(43) Veröffentlichungstag der Anmeldung: 25.11.2009
(73) Patentinhaber: EPG (Engineered Nanoproducts Germany) AG, 66482 Zweibrücken (DE)
(72) Erfinder: MENNIG, Martin, 66287 Fischbach (DE); SCHMIDT, Helmut, 66130 Saarbrücken-Güdingen (DE)
(74) Vertreter: Barz, Peter
(86) Internationale Anmeldenummer: PCT/EP2008/051869
(87) Internationale Veröffentlichungsnummer: WO 2008/099008

(56) Entgegenhaltungen:
- EP-A- 1 284 307
- DE-A1- 4 212 119
- DE-A1- 4 215 276
- US-A1- 2002 134 282
- US-B1- 6 689 205

## Beschreibung

Die Erfindung betrifft ein Verfahren zur Herstellung eines Substrats mit einer Metall-, Glas- oder Keramikoberfläche, die mit einer Interferenzpigmente enthaltenden glasartigen Schicht versehen ist, das hergestellte Substrat und dessen Verwendung.

Nanoglasschichten werden in WO 2005/066388 und WO 98/45502 beschrieben. Sie werden bei relativ hohen Temperaturen, die jedoch weit unterhalb der Transformationstemperatur des entsprechenden Glases liegen, auf Metallsubstraten, wie Stählen, Aluminium oder Messing, verdichtet. Die gegenüber den Angaben in der Literatur mögliche niedrigere Verdichtungstemperatur ergibt sich aus der nanoskaligen Struktur der aus flüssiger Phase aufgetragenen Schicht, die eine hohe innere thermodynamische Energie bedingt und die in der Folge die Verdichtungstemperatur absenkt. Damit können auf den genannten Metall-, Glas- und Keramikoberflächen transparente, glasartige Schichten von sehr geringer Dicke (z.B. 3 bis 10 µm) erhalten werden. Diese Schichten sind dicht und mechanisch sehr stabil, weisen aber im Unterschied zu erschmolzenen Gläsern einen gewissen Anteil an plastischer Verformbarkeit auf.

Es ist grundsätzlich auch möglich, die flüssigen Beschichtungsmassen mit temperaturstabilen Pigmenten zu versehen. Dann entstehen nicht mehr transparente, sondern farbige Glasschichten, die als Matrix für die Pigmente dienen.

Zur Herstellung von gut ausgebildeten Schichten darf der Pigment-Durchmesser in der Regel ein Zehntel der Schichtdicke nicht überschreiten, da ansonsten keine glatten Schichten erhalten werden können und die Pigmente aus der Oberfläche herausragen. Dies bedeutet, dass zur Herstellung von einwandfreien Nanoglasschichten die Pigment-Durchmesser je nach Schichtdicke 2 bis 5 µm nicht überschreiten dürfen. Gängige Pigmente sind jedoch in aller Regel nur mit Durchmessern im Mikrometer-Bereich erhältlich. Dies hat verschiedene Gründe:
- Das Zerkleinern der Pigmente zu Korngrößen unterhalb von 1 µm ist zudem sehr aufwändig und in vielen Fällen nicht möglich.
- Sehr feine Pigmente erzeugen in der Regel einen anderen Farbeffekt (Aufhellung) als entsprechende Pigmente mit Durchmesser über 1 µm.

Diese Feststellung gilt grundsätzlich für alle Typen von Pigmenten, das heißt auch für Pigmente, die nicht ausschließlich auf der elektronischen Absorption von Teilen des elektromagnetischen Spektrums beruhen, sondern auf der Interferenz von aufeinander abgestimmten dielektrischen Schichten mit unterschiedlicher Brechzahl, gegebenenfalls in Kombination mit Absorptionseffekten. Bei solchen Interferenzpigmenten kommt gegenüber konventionellen Pigmenten aber das weitere Problem hinzu, dass bei einer mechanischen Zerkleinerung die Interferenzschichten der Pigmente beschädigt oder ganz zerstört werden, so dass der Farbeffekt leidet oder sogar in aller Regel ganz vernichtet wird. Die derzeit am Markt verfügbaren Interferenzpigmente haben einen Durchmesser von in der Regel deutlich mehr als 10 µm. Aus den oben genannten Gründen geben Hersteller von Interferenzpigmenten an, dass es nicht möglich ist, diese Pigmente einem Zerkleinerungsverfahren zu unterwerfen.

Mit solchen Interferenzpigmenten können zwar prinzipiell die vorstehend beschriebenen Nanoglasschichten hergestellt werden, aber wegen der relativen Größe dieser Interferenzpigmente sind die erhaltenen Schichten aus den eingangs erläuterten Gründen rau, zum Teil rissig und in aller Regel durch die durch die Pigmente bedingten Verdichtungsprobleme nicht dicht und/oder sie enthalten Poren. Auf der anderen Seite sind solche Interferenzpigmente enthaltende Nanoglasschichten aus dekorativen Gründen sehr attraktiv, da es damit zum ersten Mal möglich wäre, Schichten auf der Basis von Nanoglas mit diesen Glanzpigmenten auszustatten und sie einer Anwendung zuzuführen.

Die erfindungsgemäße Aufgabenstellung bestand nun darin, Nanoglasschichten mit eingebauten Pigmenten auf der Basis von Interferenz herzustellen, ohne dass die oben genannten Nachteile in Bezug auf die Schichteigenschaften auftreten, wobei die im Handel erhältlichen üblichen Interferenzpigmente als Ausgangsmaterial eingesetzt werden sollten.. Gleichzeitig sollte überprüft werden, inwieweit sich die Interferenzpigmente auch für die Erzielung von Schichten mit geringer Rauigkeit auch auf anderen anorganischen Oberflächen, wie zum Beispiel Glasoberflächen und Keramikoberflächen, eignen.

Die erfindungsgemäße Aufgabe konnte überraschend dadurch gelöst werden, dass es mit Hilfe eines Nassmahlverfahrens, besonders durch die Anwendung eines Nass-Kugelmahlverfahrens und insbesondere unter Verwendung einer hochtourigen Rotationskugelmühle mit Rotor und Stator gelang, die Pigmente so schonend zu vermahlen, dass einerseits der Interferenzeffekt praktisch vollständig erhalten blieb und andererseits die Korngröße so verringert werden konnte, dass qualitativ hochwertige, Interferenzpigmente enthaltende Nanoglasschichten erhalten werden konnten.

Daher stellt die vorliegende Erfindung ein Verfahren zur Herstellung eines Substrats mit einer Metall-, Glas- oder Keramikoberfläche, die mit einer Interferenzpigmente enthaltenden glasartigen Schicht versehen ist, bereit, dass die folgenden Schritte umfasst:
a) Zerkleinern eines Pigments mit mindestens einer dielektrischen Interferenzschicht durch ein Nassmahlverfahren, bevorzugt auf eine Korngröße unter 6 µm,
b) Dispergieren der zerkleinerten Interferenzpigmente in eine Silicat enthaltende Suspension, um eine Beschichtungszusammensetzung zu erhalten,
c) Auftragen der Beschichtungszusammensetzung auf die Metall-, Glas- oder Keramikoberfläche durch ein Nassbeschichtungsverfahren und
d) Verdichten der aufgetragenen Beschichtungszusammensetzung bei einer Temperatur von nicht mehr als 650°C unter Bildung der die zerkleinerten Interferenzpigmente enthaltenden glasartigen Schicht.

Die Erfindung betrifft ferner die durch das erfindungsgemäße Verfahren erhältlichen Substrate mit einer Metall-, Glas- oder Keramikoberfläche, die mit einer Interferenzpigmente enthaltenden glasartigen Schicht versehen ist, und die Verwendung dieser Substrate.. Im folgenden wird die Erfindung im einzelnen erläutert.

Interferenzpigmente sind allgemein bekannt und im Handel erhältlich. Beispiele sind Iriodin^{®}-Pigmente der Fa. Merck.. Für die vorliegende Erfindung eignen sich alle bekannten Interferenzpigmente..

Als Interferenzpigmente eignen sich insbesondere solche, die eine oder mehrere Schichten auf einem Pigment oder Träger aufweisen, das bzw. die in der Regel plättchenförmig sind. In der Regel ist der Träger von der oder den Schichten umhüllt. Als Pigmente können insbesondere alle Interferenzpigmente mit einem anorganischen Träger eingesetzt werden. Beispiele für geeignete anorganische Träger sind Glimmer, SiO₂-Glas oder Metallfolie. Als Schichten, die sich auf dem Träger befinden, eignen sich z.B. Oxidschichten, insbesondere Metalloxidschichten.. Bei den Schichten handelt es sich um dielektrische Schichten, die zu Interferenzeffekten führen können. Beispiele für geeignete Materialien für die Schichten sind Metalloxide von Silicium, Titan, Eisen, Zirconium, Aluminium und Zinn oder Mischungen davon, aber auch Materialien wie MgF₂ oder ZnS können geeignet sein. Bei Vorliegen von zwei oder mehr Schichten können gleiche oder unterschiedliche. Materialien eingesetzt werden. Durch Variation von Art des Trägerelements, Anzahl, Dicke und Material der Schichten usw. können unterschiedliche Effekte erzeugt werden. Bevorzugt sind Effektpigmente auf Glimmerbasis, z.B. die bekannten Iriodin^{®}-Pigmente der Fa. Merck, bei denen Glimmer mit einer oder mehreren Metalloxidschichten umhüllt ist. Iriodin^{®}-Pigmente gibt es inzwischen in über 1000 Farbnuancen.

Im ersten Schritt werden übliche Interferenzpigmente einem Nassmahlverfahren unterworfen, um eine mechanische Zerkleinerung der Pigmente zu erreichen. Hierfür werden die Interferenzpigmente in einer flüssigen Phase eingesetzt, d.h. als Suspension. Als flüssige Phase kann jedes beliebige anorganische oder organische Dispersionsmittel bzw. Lösungsmittel verwendet werden, sofern es die zu behandelnden Teilchen nicht oder im wesentlichen nicht löst. Das geeignete Dispersionsmittel wird in Abhängigkeit von den zu behandelnden Teilchen bevorzugt aus anorganischen, wie Wasser, insbesondere entionisiertem Wasser, oder organischen Lösungsmitteln, oder Mischungen davon ausgewählt. Es kann sich um polare, unpolare oder aprotische Dispersionsmittel handeln.

Beispiele für organische Dispersionsmittel sind Alkohole, z..B. Alkohole mit 1 bis 8 Kohlenstoffatomen, wie Methanol, Ethanol, n- und i-Propanol, Butanol, Octanol, Cyclohexanol, Ketone, z.B. Ketone mit 1 bis 8 Kohlenstoffatomen, wie Aceton, Butanon und Cyclohexanon, Ester, wie Essigsäureethylester und Glycolester, Ether, wie Dimethylether, Diethylether, Dibutylether, Anisol, Dioxan, Tetrahydrofuran und Tetrahydropyran, Glycolether, wie Mono-, Di-, Tri- und Polyglycolether, Glycole, wie Ethylenglycol, Diethylenglycol und Propylenglycol, Amide und andere Stickstoffverbindungen, wie Dimethylacetamid, Pyridin und Acetonitril, Sulfoxide und Sulfone, aliphatische, alicyclische oder aromatische Kohlenwasserstoffe, z.B. mit 5 bis 15 Kohlenstoffatomen, wie z.B. Pentan, Hexan, Heptan, Octan, Cyclohexan, Benzine, Petrolether, Methylcyclohexan, Dekalin, Terpen-Lösungsmittel, Benzol, Toluol und Xylole, Halogenkohlenwasserstoffe, wie Dichlormethan, Chloroform, Tetrachlorkohlenstoff und Ethylenchlorid, und Chlorfluörkohlenstoffe oder Mischungen davon. Bevorzugte Lösungsmittel sind Alkohole und Wasser und Mischungen davon.

Die durch Mischung von Interferenzpigment und Dispersionsmittel erhaltene Suspension kann auch eine Aufschlämmung oder Paste beinhalten. Zur Suspension der Interferenzpigmente können weitere Additive, wie Dispergiermittel und rheologische Hilfsmittel, zugegeben werden, in der Regel ist das aber nicht notwendig und es wird für das Mahlen bevorzugt nur eine Mischung von Interferenzpigment und Dispersionsmittel und gegebenenfalls zusätzlich ein Dispergiermittel eingesetzt. Als Dispergiermittel, die auch als Emulgatoren oder Tenside bezeichnet werden, können alle geeigneten, dem Fachmann bekannten Dispergiermittel eingesetzt werden. Ein geeignetes Dispergiermittel kann in Abhängigkeit von der Art des Pigments und des Dispersionsmittel vom Fachmann ausgewählt werden. Beispiele für Dispergiermittel finden sich z.B. in Ullmanns Encyclopädie der technischen Chemie, 4. Auflage, unter den Kapiteln Tenside (Bd. 22, S. 455 ff.) und Emulsionen (Bd. 10, S. 449 ff). Geeignete Beispiele sind z.B. Disperbyk^{®}101, Amine wie Triethanolamin oder Silane wie γ-Aminopropyltriethoxysilan.

Die Nassmahlung kann mit üblichen und bekannten Vorrichtungen, wie Vorrichtungen zum Zerkleinern, Kneten oder Mahlen, durchgeführt werden. Beispiele geeigneter Nassmahlvorrichtungen sind Dispergatoren, Turborührer, Düsenstrahldispergatoren, Walzenstühle, Mühlen und Kneter. Beispiele für Mühlen und Kneter sind Mühlen mit losen Mahlwerkzeugen, wie Kugel-, Stab-, Trommel-, Konus-, Rohr-, Autogen-, Planeten-, Schwing- und Rührwerksmühlen, Scherwalzenkneter, Mörsermühlen und Kolloidmühlen.. Bevorzugt eingesetzte Vorrichtungen sind Homogenisatoren, Turborührer, Kugel-, Stab-, Planeten- und Schwingmühlen, Rührwerksmühlen, Walzenstühle, Kolloidmühlen und Kneter. Besonders bevorzugt wird als Nassmahlvorrichtung eine Rotationskugelmühle mit Rotor und Stator eingesetzt, die bevorzugt eine hochtourige Rotationskugelmühle mit Rotor und Stator ist.

Die zweckmäßige Temperatur für die Nassmahlung zur Zerkleinerung der Pigmente kann vom Fachmann eingestellt werden. Es kann z.B. bei Raumtemperatur bzw. Umgebungstemperatur (z.B.. 15 bis 30°C) gearbeitet werden.. Der Mahlschritt kann eine Erwärmung bewirken. Dies kann erwünscht sein, bei Bedarf kann aber auch mit üblichen Kühlaggregaten gekühlt werden. Die Mittel zur Einstellung der gewünschten Temperatur während des Verfahrens sind dem Fachmann bekannt.

Die Dauer der Nassmahlung hängt natürlich u.a. von der eingesetzten Vorrichtung, dem Energieeintrag, den eingesetzten Dispersionsmitteln und Interferenzpigmenten, deren Anteilen und dem gewünschten Zerkleinerungsgrad ab und kann daher in weiten Bereichen variieren, sie kann z.B. mehrere Minuten bis hin zu Tagen betragen. In einer Rotationskugelmühle kann z.B. eine Mahlung über einen Zeitraum von 1 bis 6 h für eine geeignete Zerkleinerung zweckmäßig sein. Die Mahlung kann in einer zwei- oder mehrstufigen Ausführung erfolgen. Bei mehreren Stufen können sich die Stufen z.B. im Energieeintrag oder in der Art der eingesetzten Mahlkörper unterscheiden.

Der Gehalt der Interferenzpigmente in der Suspension für die Nassmahlung kann ebenfalls in weiten Bereichen variieren und hängt u.a. von der eingesetzten Vorrichtung und den eingesetzten Materialien ab und kann vom Fachmann in geeigneter Weise eingestellt werden. Das Nassmahlverfahren kann sowohl kontinuierlich im Einpassagenbetrieb, Mehrpassagenbetrieb (Pendelverfahren) oder Kreisverfahren als auch diskontinuierlich im Batchbetrieb durchgeführt werden.

In einer bevorzugten Ausführungsform werden Interferenzpigmente in einem Dispersionsmittel, bevorzugt einem Alkohol, dispergiert und in einer schnell drehenden Rotationskugelmühle mit Rotor und Stator über mehrere Stunden, bevorzugt 1 bis 6 Stunden, einem Zerkleinerungsprozess unterworfen, wobei das Mahlgut im Kreislauf gefahren wird.

Als Ausgangsmaterial für die Interferenzpigmente können wie vorstehend erläutert handelsübliche Interferenzpigmente beliebiger Größe eingesetzt werden. Die derzeit am Markt verfügbaren Interferenzpigmente haben in der Regel einen Durchmesser von deutlich mehr als 10 µm. Es können z.B. Interferenz-Pigmente mit einem mittleren Partikeldurchmesser von 5 bis 25 µm eingesetzt werden.. Gemäß Herstellerangaben handelt es sich bei dem angegebenen mittleren Partikeldurchmesser um einen Bereich an vorhandenen Partikeldurchmesser, der durch Laserbeugung nach Malvern bestimmt wird.

Die als Ausgangsmaterial eingesetzten Interferenzpigmente werden dann durch das vorstehend erläuterte Nassmahlverfahren zerkleinert, d..h.. die Korngröße des Ausgangsmaterials wird durch das Nassmahlverfahren verringert. Die Interferenzpigmente werden durch das Nassmahlverfahren bevorzugt auf eine Korngröße unter 6 µm und bevorzugt unter 5 µm, z.B. 1 µm bis 5 µm, zerkleinert.

Mit einer Korngröße von unter 6 µm ist hier gemeint, dass der größte Teil der Pigmente und bevorzugt im wesentlichen alle Pigmente eine Korngröße unter 6 µm aufweisen, bevorzugt weisen mindestens 90%, bevorzugter mindestens 95%, noch bevorzugter mindestens 99% und besonders bevorzugt mindestens 99,5% oder 100% aller Teilchen, bezogen auf die Anzahl, eine Korngröße unter 6 µm auf. Die Korngröße wird mittels Lichtmikroskopie durch optische Bildauswertung bestimmt. Es sind auch andere Bestimmungsverfahren bekannt, wie z.B. die Laserbeugung nach Malvern. Da es sich im wesentlichen um plättchenförmige Teilchen handelt, wird der laterale Durchmesser bzw. der Äquivalentdurchmesser des projektionsflächengleichen Kreises in stabiler Teilchenlage als Korngröße genommen.

Trotz des Warnhinweises der Hersteller, dass die Pigmente bei Zerkleinerung ihre Farbe verlören, hat sich gezeigt, dass ausgehend von Interferenz-Pigmenten mit einem mittleren Partikeldurchmesser von 5 bis 25 µm bei einer Zerkleinerung auf einen mittleren Partikeldurchmesser von etwa 2 bis 5 µm mit dem bloßen Auge kein Unterschied in der Farbwirkung zu detektieren ist.

Nach dem Nassmahlverfahren wird eine Suspension der zerkleinerten Interferenzpigmente erhalten. Das Pigment kann dann von der zum Mahlen verwendeten flüssigen Phase mit herkömmlichen Methoden abgetrennt und getrocknet werden. Das erhaltene Pulver kann dann mit der Silicat enthaltenden Suspension vermischt werden, um die Beschichtungszusammensetzung zu erhalten.. Natürlich ist es auch möglich, das nach Abtrennung der flüssigen Phase erhaltene Pulver der Interferenzpigmente vor Zugabe zur Silicat enthaltenden Suspension mit einem anderen Dispersionsmittel zu mischen (Lösungsmittelaustausch).

Alternativ ist es möglich, die nach dem Nassmahlverfahren erhaltene Suspension der zerkleinerten Interferenzpigmente direkt mit der Silicat enthaltenden Suspension zu vermischen, um die Beschichtungszusammensetzung zu erhalten. Dies ist dann vorteilhaft, wenn die zum Mahlen verwendete flüssige Phase mit dem Sol chemisch kompatibel ist (z. B. Alkohol). Auch hier sind natürlich je nach Zweckmäßigkeit Varianten möglich, z.B. Konzentrieren oder Verdünnen der nach dem Nassmahlverfahren erhaltenen Suspension durch teilweises Abtrennen der flüssigen. Phase und/oder Zufügen desselben oder eines anderen Dispersionsmittels. Als Dispersionsmittel für einen gegebenenfalls vorzunehmenden teilweisen oder vollständigen Austausch kommen die selben Dispersionsmittel in Betracht, die vorher erläutert wurden.

Die zerkleinerten Interferenzpigmente in Pulverform oder als Suspension werden dann in eine Silicat enthaltende Suspension, vorzugsweise ein Silicatsol, dispergiert, d.h. die Suspension umfasst eine Silicatzusammensetzung. Bevorzugt handelt es sich bei der Silicat enthaltenden Suspension um ein Sol, dass mit organischen Gruppen modifizierte Silicatteilchen umfasst. Bevorzugt eingesetzte Silicat enthaltende Suspensionen sind die Beschichtungssole, die in WO 2005/066388 beschrieben werden, auf die hiermit Bezug genommen wird.

Als Silicat-haltige Zusammensetzung wird vorzugsweise eine Zusammensetzung verwendet, die durch Hydrolyse und Polykondensation von mindestens einem organisch modifizierten hydrolysierbaren Silan in Anwesenheit von Alkalimetall- oder Erdalkalimetalloxiden oder -hydroxiden und/oder nanoskaligen SiO₂-Teilchen erhalten wird.

Eine derartige Zusammensetzung oder Suspension ist z.B. erhältlich durch Hydrolyse und Polykondensation eines oder mehrerer Silane der allgemeinen Formel (I)

RₙSiX₄₋ₙ (I)

worin die Gruppen X, gleich oder verschieden voneinander, hydrolysierbare Gruppen oder Hydroxylgruppen sind, die Reste R, gleich oder verschieden voneinander, für Wasserstoff, Alkyl-, Alkenyl- und Alkinylgruppen mit bis zu 4 Kohlenstoffatomen und Aryl-, Aralkyl- und Alkarylgruppen mit 6 bis 10 Kohlenstoffatomen stehen und n 0, 1 oder 2 bedeutet, mit der Maßgabe, dass mindestens ein Silan mit n = 1 oder 2 verwendet wird, oder davon abgeleiteter Oligomere in Anwesenheit von a) mindestens einer Verbindung aus der Gruppe der Oxide und Hydroxide der Alkali- und Erdalkalimetalle und/oder b) nanoskaliger SiO₂-Teilchen.

Bevorzugt werden mindestens zwei Silane der allgemeinen Formel (I) in Kombination eingesetzt. Der Durchschnittswert von n (auf molarer Basis) der eingesetzten Ausgangssilane der Formel (I) beträgt bevorzugt 0,2 bis 1,5 und bevorzugter 0,5 bis 1,0.

In der allgemeinen Formel (I) sind die Gruppen X, die gleich oder verschieden voneinander sind, hydrolysierbare Gruppen oder Hydroxylgruppen. Konkrete Beispiele für hydrolysierbare Gruppen X sind Halogenatome (insbesondere Chlor und Brom), Alkoxygruppen und Acyloxygruppen mit bis zu 6 Kohlenstoffatomen. Besonders bevorzugt werden Alkoxygruppen, insbesondere C₁₋₄-Alkoxygruppen wie Methoxy, Ethoxy, n-Propoxy und i-Propoxy, wobei Methoxy- oder Ethoxygruppen besonders bevorzugt sind.

Bei den Gruppen R in der allgemeinen Formel (I), die im Falle von n = 2 gleich oder verschieden sein können, handelt es sich um Wasserstoff, Alkyl-, Alkenyl- und Alkinylgruppen mit bis zu 4 Kohlenstoffatomen und Aryl-, Aralkyl- und Alkarylgruppen mit 6 bis 10 Kohlenstoffatomen. Konkrete Beispiele für derartige Gruppen sind Methyl, Ethyl, n-Propyl, i-Propyl, n-Butyl, sek-Butyl und tert.-Butyl, Vinyl, Allyl und Propargyl, Phenyl, Tolyl und Benzyl. Bevorzugte Gruppen R sind Alkylgruppen mit 1 bis 4 Kohlenstoffatomen, insbesondere Methyl und Ethyl, sowie Phenyl.

Erfindungsgemäß bevorzugt ist es, wenn mindestens zwei Silane der allgemeinen Formel (I) eingesetzt werden, wobei in einem Fall n = 0 und im anderen Fall n = 1 ist. Bevorzugt sind Mischungen von mindestens einem Alkyltrialkoxysilan, wie {M)ethyltri(m)ethoxysilan, und mindestens einem Tetraalkoxysilan, wie Tetra-(m)ethoxysilan ("(m)eth" bedeutet "meth" oder "eth").

Unter nanoskaligen SiO₂-Teilchen werden vorzugsweise SiO₂-Teilchen mit einem durchschnittlichen Teilchendurchmesser von nicht mehr als 100 nm, bevorzugter nicht mehr als 50 nm und insbesondere nicht mehr als 30 nm verstanden. Unter dem mittleren Teilchendurchmesser wird hier, sofern nicht anders angegeben, der Teilchendurchmesser bezogen auf das Volumenmittel verstanden (d₅₀-Wert), wobei ein UPA (Ultrafine Particle Analyzer, Leeds Northrup (laseroptisch, dynamische Laserlichtstreuung)) zur Messung verwendet werden kann. Es können z.B. handelsübliche Kieselsäureprodukte, z.B. Kieselsole, wie die Levasile^{®}, Kieselsole der Bayer AG, oder pyrogene Kieselsäuren, z.B. die Aerosil-Produkte von Degussa, verwendet werden. Wenn nanoskalige SiO₂-Teilchen zugesetzt werden, liegt das Verhältnis aller Si-Atome in den Silanen der allgemeinen Formel (I) zu allen Si-Atomen in den nanoskaligen SiO₂-Teilchen bevorzugt im Bereich von 5:1 bis 1:2, insbesondere 3:1 bis 1:1, liegt.

Alternativ oder zusätzlich zu den nanoskaligen SiO₂-Teilchen kann die Hydrolyse und Polykondensation der Silane der Formel (I) in Anwesenheit mindestens einer Verbindung aus der Gruppe der Oxide und Hydroxide der Alkali- und Erdalkalimetalle durchgeführt werden. Bei diesen Oxiden und Hydroxiden handelt es sich vorzugsweise um solche von Li, Na, K, Mg, Ca und/oder Ba. Vorzugsweise werden Alkalimetallhydroxide, insbesondere NaOH und KOH verwendet. Bei Verwendung eines Alkali- bzw. Erdalkalimetalloxids bzw. -hydroxids liegt das Atomverhältnis Si:Alkali- oder Erdalkalimetall bevorzugt im Bereich von 20:1 bis 7:1, insbesondere von 15:1 bis 10:1. Das Atomverhältnis von Silicium zu Alkali- oder Erdalkalimetall wird so groß gewählt, dass der resultierende Überzug nicht wasserlöslich ist.

Bei Einsatz von Oxiden und Hydroxiden der Alkali- und Erdalkalimetalle findet die Hydrolyse und Polykondensation offensichtlich im alkalischen Milieu statt, was insbesondere dann von Vorteil ist, wenn gegen Angriff von Säuren nicht oder nur wenig beständige metallische Oberflächen (z.B. aus Stahl) nach dem erfindungsgemäßen Verfahren mit einem glasartigen Überzug versehen werden sollen. Wird die Hydrolyse und Polykondensation der Silane nur in Anwesenheit der nanoskaligen SiO₂-Teilchen durchgeführt, wird im allgemeinen sauer katalysiert, in der Regel mit einer anorganischen Säure.

In einer bevorzugten Ausführungsform werden die Hydrolyse und Polykondensation der Silane in Anwesenheit mindestens einer Verbindung aus der Gruppe der Oxide und Hydroxide der Alkali- und Erdalkalimetalle und gegebenenfalls auch von nanoskaligen SiO₂-Teilchen durchgeführt. Die Hydrolyse und Polykondensation können in Abwesenheit oder Anwesenheit eines Lösungsmittels durchgeführt werden. Beispiele hierfür sind die oben genannten Dispersionsmittel. Als Lösungsmittel eignen sich insbesondere mit Wasser mischbar organische Lösungsmittel, z.B. Alkohole, Ether, Ester oder Ketone, wobei Alkohole bevorzugt sind. In der Regel werden auch ohne Einsatz von SiO₂-Teilchen bei der Hydrolyse und Polykondensation aus den hydrolysierbaren Verbindungen nanoskalige Teilchen gebildet. In einer bevorzugten Ausführungsform umfasst die Silicat umfassende Zusammensetzung daher nanoskalige Teilchen, z.B. mit einem mittleren Teilchendurchmesser unter 200 nm, insbesondere SiO₂-Teilchen oder Silicatteilchen.

Die Hydrolyse und Polykondensation der hydrolysierbaren Silane erfolgt im allgemeinem nach dem Sol-Gel-Verfahren. Beim Sol-Gel-Verfahren werden gewöhnlich hydrolysierbare Verbindungen mit Wasser, gegebenenfalls unter saurer oder basischer Katalyse, hydrolysiert und gegebenenfalls zumindest teilweise kondensiert. Es können stöchiometrische Wassermengen, aber auch geringere oder größere Mengen verwendet werden. Das sich bildende Sol kann durch geeignete Parameter, z.B. Kondensationsgrad, Lösungsmittel oder pH-Wert, auf die für die Beschichtungszusammensetzung gewünschte Viskosität eingestellt werden. Weitere Einzelheiten des Sol-Gel-Verfahrens sind z.B. bei C..J. Brinker, G.W. Scherer: "Sol-Gel Science - The Physics and Chemistry of Sol-Gel-Processing", Academic Press, Boston, San Diego, New York, Sydney (1990) beschrieben.

Das Interferenzpigment wird in die Silicat enthaltende Suspension dispergiert, um die Beschichtungszusammensetzung zu erhalten. In der Regel genügt ein einfaches Einrühren. Der Anteil des zerkleinerten Interferenzpigments, der zu der Silicat enthaltenden Suspension gegeben wird, kann je nach Anwendungszweck in großem Umfang variieren. Beispielsweise kann das nach dem oben beschriebenen Mahlprozess zerkleinerte Interferenzpigment mit einem Anteil von 0,1 bis 15 Gew.-%, bevorzugt von 1 bis 6 Gew.-% und besonders bevorzugt von 1,5 bis 3 Gew.-%, bezogen auf das Gesamtgewicht der aufzutragenden Beschichtungszusammensetzung (einschließlich Dispersionsmittel), eindispergiert werden. Durch die Wahl des Pigmentanteiles kann die Rauhigkeit der Beschichtung, der Deckungsgrad auf dem Metallsubstrat und die Kratz- und Abriebfestigkeit der feinstinterferenzpigmenthaltigen Schicht beeinflusst werden.

Der Beschichtungszusammensetzung können bei Bedarf übliche lacktechnische Additive zugesetzt werden, z.B. die Rheologie und das Trocknungsverhalten steuernde Additive, Benetzungs- und Verlaufhilfsmittel oder Entschäumer. Es können z.B. auch handelsübliche Mattierungsmittel, wie mikroskalige SiO₂-Teilchen oder keramische Pulver, zugesetzt werden, um mattierte Schichten mit Anti-Fingerprint-Eigenschaften zu erreichen.

Das Substrat weist eine Metall-, Glas- oder Keramikoberfläche auf, wobei die Beschichtung von Metalloberflächen bevorzugt sind. Das Substrat kann ganz aus Metall, Glas oder Keramik bestehen oder nur ein Teil davon. Es kann z.B. eine Beschichtung aus Metall, Glas oder Keramik auf einem Substrat aus einem anderen Material als zu beschichtende Oberfläche dienen.

Beispiele für Glas sind Natronkalkglas, Borosilicatglas, Bleikristall und Kieselglas. Es kann sich z.B. um Flachglas, Hohlglas wie Behälterglas, oder um Laborgeräteglas handeln. Bei der Keramik handelt es sich z.B. um eine Keramik auf Basis der Oxide SiO₂, Al₂O₃, ZrO₂ oder MgO oder der entsprechenden Mischoxide.

Als erfindungsgemäß zu beschichtende Substrate mit metallischer Oberfläche eignen sich alle Gegenstände, wie Halbzeuge und Fertigprodukte oder Teile davon, die aus einem Metall oder einer Metalllegierung bestehen oder zumindest eine Oberfläche aus einem Metall oder einer Metalllegierung umfassen. Beispiele für solche metallische Oberflächen sind Aluminium, Zinn, Zink, Kupfer, Chrom, Nickel, verzinkte, verchromte oder emaillierte Oberflächen, Stahl, insbesondere Edelstahl, Aluminium-, Magnesium- und Kupferlegierungen wie Messing und Bronze.. Besonders bevorzugt sind metallische Oberflächen aus Edelstahl, Aluminium und Messing. Besondere Vorteile werden bei der Beschichtung von Gegenständen erzielt, die anschließend kaltverformt werden, da die erfindungsgemäße glasartige Beschichtung verformbar ist.

Die metallische Oberfläche kann vor dem Auftrag der Beschichtungszusammensetzung gereinigt, von Fett und Staub befreit und/oder einer Oberflächenbehandlung, z.B. durch Corona-Entladung, unterworfen werden. Die metallische Oberfläche bzw. das metallische Substrat kann eine ebene oder eine strukturierte Oberfläche aufweisen Die Struktur kann regelmäßig sein, wie sie z.B. durch Prägen oder Ätzen erhalten wird, oder unregelmäßig sein, wie sie z.B. durch Aufrauen erhalten wird. Eine Aufrauung der metallischen Oberfläche ist z. B. durch Sandstrahlen, Glasperlenstrahlen oder Bürsten möglich. Die Verfahren zur Strukturierung metallischer Oberflächen sind dem Fachmann bekannt. Durch die Strukturierung können z.B. dekorative Effekte erzielt werden.. Besonders geeignete Metall-, Glas- oder Keramikoberflächen sind z.B. gebürstete Metallsubstrate, insbesondere Edelstahlsubstrate.

Die erhaltene, die Interferenzpigmente enthaltende Beschichtungszusammensetzung, insbesondere als Beschichtungssol, kann mit allen gängigen Nasslackierverfahren auf das zu beschichtende Metallteil aufgetragen werden. Der Auftrag erfolgt in der Regel mit einer Nassfilmdicke von 4 bis 20 µm, bevorzugt von 6 bis 15 µm und besonders bevorzugt von 10 bis 12 µm.

Anwendbare Techniken für das Aufbringen der Beschichtungszusammensetzung sind z.B. Tauchen, Gießen, Fluten, Schleudern, Sprühen, Aufstreichen oder der Siebdruck. Dabei ist die Sprühtechnik besonders bevorzugt. Es können zum Verdünnen übliche Lösungsmittel, wie sie in der Lackierungsindustrie gebräuchlich sind, verwendet werden.

Die auf die metallische Oberfläche aufgetragene Beschichtungszusammensetzung wird normalerweise bei Raumtemperatur (ca. 20°C) bzw. leicht erhöhter Temperatur, z.B. bis zu 100°C, insbesondere bis zu 80°C, getrocknet. Die aufgetragene Beschichtung ist in der Regel bei Raumtemperatur nach ca. 2 Minuten staubtrocken. Die aufgetragene, in der Regel getrocknete Schicht wird dann einer thermischen Verdichtung bei einer Temperatur von nicht mehr als 650°C unterworfen, um die zerkleinerte Interferenzpigmente enthaltende glasartige Schicht zu erhalten. Der thermische Verdichtungsschritt kann prinzipiell genau nach dem in WO 2005/066388 beschriebenen Verfahren durchgeführt werden, weswegen insbesondere bezüglich der Einzelheiten der Bedingungen für die Verdichtung ausdrücklich auf diese Patentanmeldung verwiesen und hiermit in die Offenbarung aufgenommen wird.. In der Regel werden für die erforderliche Erwärmung für die Verdichtung gängige Öfen eingesetzt, auch eine Erwärmung durch IR- oder Laser-Bestrahlung ist möglich.

Die maximale Verdichtungstemperatur liegt dabei bevorzugt im Bereich von 300°C bis 650°C, bevorzugt von 400°C bis 560 °C und besonders bevorzugt von 475°C bis 530°C. Die thermische Verdichtung kann sowohl in sauerstoffhaltiger, als auch in inerter oder in reduzierender Atmosphäre erfolgen, wobei mehrere Stufen durchlaufen werden können.

Die für die Verdichtung eingesetzten Parameter wie Atmosphäre, Temperaturerhöhungsrate, maximale Endtemperatur, Dauer, Abkühlgeschwindigkeit usw. können vom Fachmann ohne weiteres ermittelt werden, es wird insbesondere auf die oben genannte WO 2005/066388 verwiesen. Die Verdichtung kann ein- oder mehrstufig durchgeführt werden. Bevorzugt ist ein zweistufiges Wärmebehandlungsverfahren, z.B. wie in WO 2005/066388 erläutert.

In der ersten Wärmebehandlungsstufe kann z.B.. gemäß einer Variante in einer sauerstoffhaltigen Atmosphäre mit einem Sauerstoffgehalt von z.B. 15 bis 90 Vol-%, bevorzugt 19 bis 20 Vol-%, bis zu einer Endtemperatur von etwa 200°C oder gemäß einer anderen Variante B im Vakuum bei einem Restdruck von 15 mbar oder weniger, vorzugsweise 5 mbar und darunter und besonders bevorzugt etwa 2,5 mbar, bis zu einer Endtemperatur von etwa 500°C, vorzugsweise bis zu etwa 200°C und besonders bevorzugt bis zu etwa 180°C, erwärmt werden. In der zweiten Wärmebehandlungstufe erfolgt eine weitere Verdichtung unter Ausbildung einer glasartigen Schicht. Die zweite Wärmebehandlungsstufe kann z.B. in einer sauerstoffarmen Atmosphäre mit einem Sauerstoffgehalt unter 0,5 Vol-% bevorzugt bis zu einer Endtemperatur im Bereich von 400 bis 600°C durchgeführt werden. Vorzugsweise wird als sauerstoffarme Atmosphäre ein Inertgas wie Stickstoff oder Argon, ein reduzierendes Gas wie Formiergas oder Vakuum mit einem Luftdruck ≤ 10 mbar verwendet. Die Verweilzeiten bei den maximalen Temperaturen betragen üblicherweise 5 bis 75 min, vorzugsweise 20 bis 60 min und besonders bevorzugt 45 bis 60 min.. Die Abkühlphase von etwa 400 bis 500°C abwärts kann in sauerstoffarmer Atmosphäre oder in sauerstoffhaltiger Atmosphäre erfolgen. Geeignete Abkühlgeschwindigkeiten liegen z.B. bei 1 bis 10 K/min, vorzugsweise 2 bis 7 K/min.

Durch die Wahl der Ofenatmosphäre in Verbindung mit der Temperatur bzw. in Verbindung mit bestimmten Temperaturbereichen können verschiedene Beschichtungseigenschaften gezielt beeinflusst werden. Dies betrifft. z.B. je nach Art des Metallsubstrates mögliche Anlauffarben, die bei nicht vollständig deckender feinstinterferenzpigmenthaltiger Beschichtung zum optischen Gesamtbild des beschichteten Metallteiles beitragen können. Weitere Schichteigenschaften sind Kratzfestigkeit, Porosität, die hydrolytische Beständigkeit und die Hydrophobie bzw. Hydrophilie der Beschichtung. Die durch Aufnahme der zerkleinerten Interferenzpigmente, die hier auch als Feinstinterferenzpigmente bezeichnet werden, erreichten optische Effekte sind überraschenderweise praktisch nicht unterscheidbar von denen, die allgemein mit unbehandelten Pigmenten erzielt werden können.

Es werden glasartige Schichten auf metallischen Oberflächen ohne Rissbildung erhalten. Die Beschichtungszusammensetzungen können schon bei relativ niedrigen Temperaturen (in der Regel ab 400°C) in dichte Silicat- bzw. SiO₂-Schichten umgewandelt werden. Durch die Verdichtung wird eine glasartige Schicht oder Glasschicht erhalten. In der bevorzugten Ausführungsform sind wie vorstehend erläutert nanoskalige Partikel in der Beschichtungszusammensetzung erhalten. Die daraus erhaltene Schicht wird daher auch als Nanoglasschicht bezeichnet. Die Ausdrücke glasartige Schicht, Glasschicht und Nanoglasschicht werden hier miteinander austauschbar verwendet.

Die erhaltenen glasartigen Schichten haben bevorzugt eine Dicke von 10 µm oder weniger, z.B. 1 bis 6 µm, vorzugsweise 1,5 bis 5 µm und insbesondere 2,5 bis 4,5 µm.

Die erfindungsgemäßen Substrate mit einer Metall-, Glas- oder Keramikoberfläche, die mit einer zerkleinerte Interferenzpigmente enthaltenden glasartigen Schicht versehen sind, können in einer Reihe von Anwendungen verwendet werden, insbesondere für dekorative Zwecke bzw. zur optischen Differenzierung gegebenenfalls in Verbindung mit hohem Korrosions-, Kratz-, Abrieb-, Hochtemperaturanlauf- und Fingerprintschutz sowie in Verbindung mit beliebigen Kombination dieser Eigenschaften.

Beispiele für Substrate, die gemäß der vorliegenden Erfindung mit einer solchen Schicht versehen werden können, sind Metallteile von Fahrzeugen aller Art, insbesondere von Auspuffanlagen, sowie für Teile von Schiffen und Flugzeugen; von Hausgeräten, Lichtschaltern aus Metall und Metallmöbeln aller Art; Metallteile für metallische Gehäuse von Mobiltelefonen, Foto- und Videokameras, Computern, Laptops, Musikabspielgeräten, wie MP3-Playern oder iPods^{®}, und anderen elektronischen Geräten; von Geräten und Anlagen der Medizintechnik und des Geräte- und Anlagenbaus; für dekorativen Korrosionsschutz auf Metallfassaden, insbesondere bei Metallfassaden aus Aluminium, sowie für metallische Wand- und Fußbodenelemente; für Sport- und Freizeitgeräte aller Art. Die erfindungsgemäßen Substrate eignen sich auch als Eloxalersatz. Weitere Verwendungsbeispiele lassen sich aus der WO 2005/066388 entnehmen.

Die vorstehend erläuterte Beschichtungszusammensetzung, umfassend eine Silicatzusammensetzung und durch ein Nassmahlverfahren auf eine Korngröße unter 6 µm zerkleinerte Interferenzpigmente eignet sich auch zur Verwendung als Druckfarbe, wobei gegebenenfalls durch Entfernen oder Zusetzen von Dispersionsmittel eine geeignete Viskosität eingestellt wird und gegebenenfalls für Druckfarben übliche Additive zugesetzt werden. Die Beschichtungszusammensetzung eignet sich etwa zur Bedruckung anorganischer Substrate, wie Glas, Metall, Keramik oder Glaskeramik. Als Druckverfahren sind insbesondere solche bevorzugt, mit denen möglichst dünne Drucke möglich sind, z.B. mit einer Dicke von weniger als 20 µm oder weniger als 30 µm Beispiele für solche Druckverfahren, die einen dünnen Druck ermöglichen, sind Tampondruck oder Flexodruck, aber auch Siebdruck mit sehr feinen Sieben.

Die folgenden Beispiele erläutern die Erfindung ohne sie zu beschränken.

### Beispiel 1

### Herstellung eines Silicat enthaltenden Beschichtungssols

Es wurde ein Natriumsilicat-Beschichtungssol wie in WO 2005/066388 beschrieben hergestellt.. Hierfür werden 25 ml (124,8 mMol) Methyltriethoxysilan (MTEOS) mit 7 ml (31,4 mMol) Tetraethoxysilan (TEOS) und 0,8 g (20 mMol) Natriumhydroxid über Nacht (mindestens 12 Stunden) bei Raumtemperatur gerührt, bis sich das gesamte Natriumhydroxid gelöst hat und eine klare gelbe Lösung vorliegt..

Anschließend werden 3,2 ml (177,8 mMol) Wasser bei Raumtemperatur langsam zugetropft, wobei sich die Lösung erwärmt. Nach Beendigung der Wasserzugabe wird die klare gelbe Lösung bei Raumtemperatur gerührt, bis sie wieder abgekühlt ist, und anschließend über einen Filter mit einer Porengröße von 0,8 µm filtriert.

### Herstellung einer goldfarbigen Beschichtungsmasse

250 g eines Perlglanzpigmentgemisches (Iriodin^{®} 323 und Iriodin^{®} 120 im Verhältnis 1 : 1) wurden in 3 I Ethanol suspendiert hinzugegeben und in einer Rotationskugelmühle bei 1500 U/min 3 h im Kreislauf vermahlen. Die Nassvermahlung kann auch mit einer Suspension durchgeführt werden, zu der zusätzlich 2 g eines üblichen Dispergiermittels, wie z..B. DISPERBYK 101, Triethanolamin oder γ-Aminopropyltriethoxysilan, zugegeben wurden. Anschließend wurde das gemahlene Pigmentgemisch in das vorstehend synthetisierte silicatische Beschichtungssol gegeben, ohne dass der Ethanol zuvor entfernt wurde. Der Pigmentgehalt betrug 3 Gew.%, bezogen auf das Beschichtungssol.

### Beschichtung metallischer Oberflächen

Mit diesem pigmenthaltigen Beschichtungssol wurden Edelstahlplatten (10 x 10 cm²) im manuellen Sprühverfahren beschichtet und nach Verdunsten des Lösungsmittels bei Raumtemperatur nach einer Wartezeit von 30 Minuten bei 475 °C in sauerstoffhaltiger Atmosphäre thermisch verdichtet. Die Aufheizrate betrug 2 K / min., die Haltezeit bei 475 °C betrug 1 Stunde und die Abkühlung auf 290 °C erfolgte in 2,5 Stunden durch Einblasen von Pressluft in den Ofen. Nach dem Herausnehmen aus dem Ofen wurden die Platten auf Raumtemperatur abgekühlt. Es wurde eine glänzende, champagnerfarbene Beschichtung erhalten, die sich in ihrer Rauhigkeit und in ihrem Gleitverhalten von einer auf gleiche Weise hergestellten pigmentfreien Beschichtung nicht unterschied.

### Beispiel 2

### Interferenzpigmenthaltige Beschichtung auf gepressten Edelstahlformkörpern mit rechtwinkligen Kanten

Mit dem pigmenthaltigen Beschichtungssol aus Beispiel 1 wurden gepresste Edelstahlformkörper mit rechtwinkligen Kanten im manuellen Sprühverfahren beschichtet und nach Verdunsten des Lösungsmittels bei Raumtemperatur nach einer Wartezeit von 30 Minuten bei 400 °C in sauerstoffhaltiger Atmosphäre thermisch verdichtet. Die Aufheizrate betrug 2 K / min., die Haltezeit bei 400 °C betrug 1 Stunde und die Abkühlung auf 290 °C erfolgte in 2,5 Stunden durch Einblasen von Pressluft in den Ofen. Danach wurden die beschichteten Edelstahlformkörper aus dem Ofen entnommen und innerhalb von 45 Minuten auf Raumtemperatur abgekühlt. Es wurde eine glänzende, champagnerfarbene Beschichtung erhalten, die sich in Haptik und in Antifingerprinteigenschaft von einer auf gleiche Weise hergestellten pigmentfreien Beschichtung nicht unterschied.

### Vergleichsbeispiel

Eine Suspension der Ausgangspigmente wies einen Korndurchmesser von 5 bis 25 µm auf. Die Suspension dieses Interferenzpigments wurde durch das Nassmahlverfahren auf einen mittleren Korndurchmesser von etwa 2 bis 5 µm zerkleinert. Zwischen Ausgangsprobe und gemahlener Probe konnte mit dem bloßen Auge kein Unterschied in der Farbwirkung festgestellt werden.

Aus den lichtmikroskopischen Aufnahmen des Ausgangsprodukts und des vermahlenen Produkts erkennt man, dass die vermahlenen Interferenzpigmente deutlich feiner als die unbehandelten Pigmente sind und im Schnitt eine Größe von 2 bis 5 µm aufweisen. Völlig überraschend ist nun, dass die Interferenzfarben nach dem Zerkleinern praktisch vollständig erhalten bleiben.

In den vorstehend beschriebenen Beispielen wurden gebürstete Edelstahlplatten mit Silicat enthaltenden Beschichtungssuspensionen wie vorstehend beschrieben beschichtet und verdichtet. Als Vergleich wurden neben Beschichtungen von den zerkleinerten Interferenzpigmenten auch solche mit der Ausgangskorngröße des Pigmentes wie vorstehend beschrieben hergestellt.. Die Schichtdicke betrug jeweils etwa 5 µm. Während die Schichten mit den zerkleinerten Pigmenten sehr glatte Oberflächen aufwiesen (arithmetischer Mittenrauhwert Rₐ = ca. 1 µm und Peak-tovalley-Rauhigkeit R_{z} = ca. 7 µm), zeigten die anderen Proben mit den unzerkleinerten Pigmenten eine deutlich raue Oberfläche (Rₐ = ca. 2 µm und R_{z} = ca. 11 µm).

## Patentansprüche

1. Verfahren zur Herstellung eines Substrats mit einer Metall-, Glas- oder Keramikoberfläche, die mit einer Interferenzpigmente enthaltenden glasartigen Schicht versehen ist, umfassend die folgenden Schritte:
a) Zerkleinern eines Pigments mit mindestens einer dielektrischen Interferenzschicht durch ein Nassmahlverfahren,
b) Dispergieren der zerkleinerten Interferenzpigmente in eine Silicat enthaltende Suspension, um eine Beschichtungszusammensetzung zu erhalten,
c) Auftragen der Beschichtungszusammensetzung auf die Metall-, Glas- oder Keramikoberfläche durch ein Nassbeschichtungsverfahren und
d) Verdichten der aufgetragenen Beschichtungszusammensetzung bei einer Temperatur von nicht mehr als 650°C unter Bildung der die zerkleinerten Interferenzpigmente enthaltenden glasartigen Schicht.

2. Verfahren nach Anspruch 1, **dadurch gekennzeichnet, dass** das Pigment mit mindestens einer dielektrischen Interferenzschicht durch das Nassmahlverfahren in Schritt a) auf eine Korngröße unter 6 µm zerkleinert wird.

3. Verfahren nach Anspruch 1 oder Anspruch 2, **dadurch gekennzeichnet, dass** die Interferenzpigmente in einer Kugelmühle, vorzugsweise einer Rotationskugelmühle, zerkleinert werden.

4. Verfahren nach einem der Ansprüche 1 bis 3, **dadurch gekennzeichnet, dass** es sich bei den Pigmenten auf der Basis von dielektrischen Interferenzschichten um Pigmente mit einem anorganischen Träger handelt, wobei der anorganische Träger bevorzugt aus Glimmer, SiO₂-Glas oder Metallfolie ausgewählt ist.

5. Verfahren nach einem der Ansprüche 1 bis 4, **dadurch gekennzeichnet, dass** die Pigmente mit dielektrischen Interferenzschichten Iriodin-Pigmente sind.

6. Verfahren nach einem der Ansprüche 1 bis 5, **dadurch gekennzeichnet, dass** die Interferenzpigmente nach dem Nassmahlverfahren direkt als Suspension mit der Silicat enthaltenden Suspension gemischt werden oder dass die Interferenzpigmente nach dem Nassmahlverfahren von der zum Mahlen verwendeten flüssigen Phase abgetrennt und getrocknet werden und als Pulver zur Silicat enthaltenden Suspension zugemischt werden.

7. Verfahren nach einem der Ansprüche 1 bis 6, **dadurch gekennzeichnet, dass** die Silicat enthaltende Suspension ein Beschichtungssol ist, das mit organischen Gruppen modifizierte Silicatteilchen umfasst, wobei das Beschichtungssol vorzugsweise erhältlich ist durch ein Verfahren umfassend die Hydrolyse und Polykondensation eines oder mehrerer Silane der allgemeinen Formel (I)
RₙSiX₄₋ₙ (I)
worin die Gruppen X, gleich oder verschieden voneinander, hydrolysierbare Gruppen oder Hydroxylgruppen sind, die Reste R, gleich oder verschieden voneinander, für Wasserstoff, Alkyl-, Alkenyl- und Alkinylgruppen mit bis zu 4 Kohlenstoffatomen und Aryl-, Aralkyl- und Alkarylgruppen mit 6 bis 10 Kohlenstoffatomen stehen und n 0, 1 oder 2 bedeutet, mit der Maßgabe, dass mindestens ein Silan mit n = 1 oder 2 verwendet wird, oder davon abgeleiteter Oligomere in Anwesenheit von a) mindestens einer Verbindung aus der Gruppe der Oxide und Hydroxide der Alkali- und Erdalkalimetalle und/oder b) nanoskaligen SiO₂-Teilchen.

8. Verfahren nach Anspruch 7, **dadurch gekennzeichnet, dass** das Alkali- oder Erdalkalimetalloxid bzw. -hydroxid in einer solchen Menge eingesetzt wird, dass das Atomverhältnis Si : Alkali- oder Erdalkalimetall im Bereich von 20:1 bis 7:1 liegt.

9. Verfahren nach einem der Ansprüche 1 bis 8, **dadurch gekennzeichnet, dass** die Beschichtungszusammensetzung mit einer Nassfilmdicke von 4 von 20 µm auf die Metall-, Glas- oder Keramikoberfläche aufgetragen wird.

10. Verfahren nach einem der Ansprüche 1 bis 9, **dadurch gekennzeichnet, dass** die Verdichtung der aufgetragenen Beschichtungszusammensetzung bei einer maximalen Verdichtungstemperatur im Bereich von 300°C bis 650°C erfolgt.

11. Verfahren nach einem der Ansprüche 1 bis 10, **dadurch gekennzeichnet dass,** die thermische Verdichtung in sauerstoffhaltiger, inerter oder reduzierender Atmosphäre erfolgt, wobei mehrere Stufen mit unterschiedlichen Atmosphären- und/oder Temperaturbedingungen durchlaufen werden können.

12. Verfahren nach einem der Ansprüche 1 bis 11, **dadurch gekennzeichnet dass,** die Verdichtung in einem zweistufigen Wärmebehandlungsverfahren erfolgt, wobei die Wärmebehandlung in der ersten Stufe entweder (A) in einer sauerstoffhaltigen Atmosphäre oder (B) im Vakuum bei einem Restdruck von 5 bis 15 mbar durchgeführt wird und in der zweiten Stufe in einer sauerstoffarmen Atmosphäre bis zur vollständigen Verdichtung unter Ausbildung einer glasartigen Schicht durchgeführt wird.

13. Verfahren nach einem der Ansprüche 1 bis 12, **dadurch gekennzeichnet dass,** die Abkühlphase des wärmebehandelten Substrats in einer sauerstoffhaltigen oder sauerstoffarmen Atmosphäre durchgeführt wird.

14. Substrat mit einer Metall-, Glas- oder Keramikoberfläche, die mit einer glasartigen Silicatschicht versehen ist, wobei in der Silicatschicht durch ein Nassmahlverfahren zerkleinerte Interferenzpigmente mit einer Korngröße unter 6 µm enthalten sind.

15. Substrat mit einer Metall-, Glas- oder Keramikoberfläche nach Anspruch 14, **dadurch gekennzeichnet dass** das Substrat ein Metallteil aus Stahl, Edelstahl, Aluminium oder Messing ist oder umfasst.

16. Substrat mit einer Metalloberfläche nach Anspruch 14 oder Anspruch 15, **dadurch gekennzeichnet dass** es sich um ein Metallteil von einem Fahrzeug, insbesondere einem Land-, Wasser-, Luft- oder Raumfahrzeug, insbesondere einer Auspuffanlage, einem Haushalts- oder Bürogerät, einem Gefäß, einem Lichtschalter, einem Möbel, einem Gehäuse eines elektronischen oder elektrischen Geräts, einem Gerät oder einer Anlage aus der Medizintechnik oder dem Geräte- und Anlagenbau, einem Bauwerk, einer Fassade oder Fassadenverkleidung, einem Geländer, einem Wand- oder Fußbodenelement, Beschlägen, einem Sport- oder Freizeitgerät oder einen Eloxalersatz handelt.

17. Verwendung eines Substrats mit einer Metall-, Glas- oder Keramikoberfläche nach einem der Ansprüche 14 bis 16 für dekorative Zwecke oder zur optischen Differenzierung.

18. Druckfarben-Zusammensetzung, umfassend eine Silicatzusammensetzung und durch ein Nassmahlverfahren zerkleinerte Interferenzpigmente mit einer Korngröße unter 6 µm.

## Claims

1. Process for producing a substrate which has a metal, glass or ceramic surface and has been provided with a vitreous layer comprising interference pigments, comprising the following steps:
a) comminuting a pigment having at least one dielectric interference layer by a wet grinding process,
b) dispersing the comminuted interference pigments into a silicate-containing suspension in order to obtain a coating composition,
c) applying the coating composition to the metal, glass or ceramic surface by a wet coating process and
d) densifying the coating composition applied at a temperature of not more than 650°C to form the vitreous layer comprising the comminuted interference pigments.

2. Process according to Claim 1, **characterized in that** the pigment with at least one dielectric interference layer is comminuted by the wet grinding process in step a) to a particle size below 6 µm.

3. Process according to Claim 1 or Claim 2, **characterized in that** the interference pigments are comminuted in a ball mill, preferably a rotary ball mill.

4. Process according to any one of Claims 1 to 3, **characterized in that** the pigments based on dielectric interference layers are pigments with an inorganic support, the inorganic support being preferably selected from mica, SiO₂ glass and metal foil.

5. Process according to any one of Claims 1 to 4, **characterized in that** the pigments with dielectric interference layers are lriodin pigments.

6. Process according to any one of Claims 1 to 5, **characterized in that** the interference pigments, after the wet grinding process, are mixed directly as a suspension with the silicate-containing suspension, or **in that** the interference pigments, after the wet grinding process, are removed from the liquid phase used for grinding and dried, and added as a powder to the silicate-containing suspension.

7. Process according to any one of Claims 1 to 6, **characterized in that** the silicate-containing suspension is a coating sol which is obtainable by a process comprising the hydrolysis and polycondensation of one or more silanes of the general formula (I)
RₙSiX₄₋ₙ (I)
in which the X groups are the same or different from one another and are each hydrolysable groups or hydroxyl groups, the R radicals are the same or different from one another and are each hydrogen, alkyl groups, alkenyl groups and alkynyl groups having up to 4 carbon atoms and aryl groups, aralkyl groups and alkaryl groups having 6 to 10 carbon atoms, n is 0, 1 or 2, with the proviso that at least one silane where n = 1 or 2 is used, or oligomers derived therefrom in the presence of a) at least one compound from the group of the oxides and hydroxides of the alkali metals and alkaline earth metals and/or b) nanoscale SiO₂ particles.

8. Process according to Claim 7, **characterized in that** the alkali metal or alkaline earth metal oxide or alkali metal or alkaline earth metal hydroxide is used in such an amount that the atomic ratio of Si : alkali metal or alkaline earth metal is in the range of 20:1 to 7:1.

9. Process according to any one of Claims 1 to 8, **characterized in that** the coating composition is applied to the metal, glass or ceramic surface in a wet film thickness of 4 to 20 µm.

10. Process according to any one of Claims 1 to 9, **characterized in that** the consolidation of the coating composition applied is effected at a maximum densification temperature in the range of 300°C to 650°C.

11. Process according to any one of Claims 1 to 10, **characterized in that** the thermal consolidation is effected in an oxygenous, inert or reducing atmosphere, and several stages with different atmospheric and/or temperature conditions may be passed through.

12. Process according to any one of Claims 1 to 11, **characterized in that** the densification is effected in a two-stage thermal treatment process, the thermal treatment being carried out in the first stage either (A) in an oxygenous atmosphere or (B) under vacuum at a residual pressure of 5 to 15 mbar, and, in the second stage, in a low-oxygen atmosphere until complete densification to form a vitreous layer.

13. Process according to any one of Claims 1 to 12, **characterized in that** the cooling phase of the thermally treated substrate is carried out in an oxygenous or low-oxygen atmosphere.

14. Substrate which has a metal, glass or ceramic surface and is provided with a vitreous silicate layer, interference pigments which have been comminuted by a wet grinding process and have a particle size below 6 µm being present in the silicate layer.

15. Substrate with a metal, glass or ceramic surface according to Claim 14, **characterized in that** the substrate is or comprises a metal part made of steel, stainless steel, aluminium or brass.

16. Substrate with a metal surface according to Claim 14 or Claim 15, **characterized in that** it is a metal part of a vehicle, especially a land, water, air or space vehicle, especially an exhaust system, a piece of domestic or office equipment, a vessel, a light switch, a piece of furniture, a housing of an electronic or electrical appliance, a machine or a device from medical technology or machinery and plant construction, a building, a facade or facade cladding, a handrail, a wall or floor element, fittings, a piece of sport or leisure equipment, or an eloxal substitute.

17. Use of a substrate with a metal, glass or ceramic surface according to any one of Claims 14 to 16 for decorative purposes or for visual differentiation.

18. Printing ink composition comprising a silicate composition and interference pigments which have been comminuted by a wet grinding process and have a particle size below 6 µm.

## Revendications

1. Procédé de fabrication d'un substrat qui présente une surface en métal, verre ou céramique qui est dotée d'une couche vitreuse contenant des pigments à interférences, lequel procédé comporte les étapes suivantes :
a) réduire en menus fragments, par broyage au mouillé, un pigment comportant au moins une couche de diélectrique à interférences ;
b) disperser ce pigment à interférences, réduit en menus fragments, dans une suspension contenant un silicate, pour en faire une composition d'enduction ;
c) appliquer cette composition d'enduction sur la surface en métal, verre ou céramique, par un procédé d'enduction au mouillé ;
d) et solidifier la composition d'enduction appliquée, à une température d'au plus 650 °C, avec formation de la couche vitreuse contenant les menus fragments de pigment à interférences.

2. Procédé conforme à la revendication 1, **caractérisé en ce que,** dans l'étape (a), le pigment comportant au moins une couche de diélectrique à interférences est réduit, par broyage au mouillé, en particules de taille inférieure à 6 µm.

3. Procédé conforme à la revendication 1 ou 2, **caractérisé en ce que** le pigment à interférences est réduit en menus fragments dans un broyeur à boulets, de préférence dans un broyeur à boulets rotatif.

4. Procédé conforme à l'une des revendications 1 à 3, **caractérisé en ce que** le pigment à couches de diélectrique à interférences est un pigment doté d'un support inorganique, lequel support inorganique est choisi de préférence parmi du mica, du verre de silice et des feuilles de métal.

5. Procédé conforme à l'une des revendications 1 à 4, **caractérise en ce que** le pigment à couches de diélectrique à interférences est un pigment du type de ceux de marque Iriodin.

6. Procédé conforme à l'une des revendications 1 à 5, **caractérisé en ce que,** après le broyage au mouillé, les fragments de pigment à interférences sont directement mélangés, à l'état de suspension, avec la suspension contenant un silicate, ou bien **en ce que**, après le broyage au mouillé, les fragments de pigment à interférences sont séparés de la phase liquide employée pour le broyage et séchés, puis ajoutés à l'état de poudre à la suspension contenant un silicate et mélangés avec celle-ci.

7. Procédé conforme à l'une des revendications 1 à 6, **caractérisé en ce que** la suspension contenant un silicate est un sol d'enduction qui contient des particules de silicate modifiées avec des groupes organiques, lequel sol d'enduction est obtenu de préférence par un procédé comprenant l'hydrolyse et la polycondensation d'un ou de plusieurs silane(s) de formule générale (I) :
RₙSiX₄₋ₙ (I)
dans laquelle les entités symbolisées par X sont identiques ou différentes les unes des autres et sont des groupes hydrolysables ou des groupes hydroxyle, les entités symbolisées par R sont identiques ou différentes les unes des autres et sont des atomes d'hydrogène, des groupes alkyle, alcényle ou alcynyle comportant jusqu'à 4 atomes de carbone, ou des groupes aryle, aryl-alkyle ou alkyl-aryle comportant de 6 à 10 atomes de carbone, et l'indice n vaut 0, 1 ou 2,
étant entendu qu'on utilise au moins un silane où n vaut 1 ou 2,
ou d'oligomères dérivés de tels silanes, ces réactions étant effectuées en présence
a) d'au moins un composé choisi parmi les oxydes et hydroxydes de métal alcalin ou alcalino-terreux,
b) et/ou de nanoparticules de silice.

8. Procédé conforme à la revendication 7, **caractérisé en ce que** l'on utilise un oxyde ou un hydroxyde de métal alcalin ou alcalino-terreux en une quantité telle que le rapport atomique du silicium au métal alcalin ou alcalino-terreux vaille de 20/1 à 7/1.

9. Procédé conforme à l'une des revendications 1 à 8, **caractérisé en ce que** la composition d'enduction est appliquée sur la surface en métal, verre ou céramique en un film épais de 4 à 20 µm à l'état non séché.

10. Procédé conforme à l'une des revendications 1 à 9, **caractérisé en ce que** la solidification de la composition d'enduction appliquée est effectuée à une température maximale de solidification située dans l'intervalle allant de 300 à 650 °C.

11. Procédé conforme à l'une des revendications 1 à 10, **caractérisé en ce que** la solidification par traitement thermique est effectuée sous une atmosphère qui est inerte ou réductrice ou qui contient de l'oxygène, étant entendu qu'elle peut se dérouler en plusieurs étapes réalisées sous des atmosphères différentes et/ou à des températures différentes.

12. Procédé conforme à l'une des revendications 1 à 11, **caractérisé en ce que** la solidification est réalisée suivant un procédé de traitement thermique en deux étapes, dont la première étape se déroule (A) soit sous une atmosphère contenant de l'oxygène, (B) soit sous vide, sous une pression résiduelle de 5 à 15 mbar, et la deuxième étape se déroule sous une atmosphère pauvre en oxygène, jusqu'à solidification complète avec formation d'une couche vitreuse.

13. Procédé conforme à l'une des revendications 1 à 12, **caractérisé en ce que** l'étape de refroidissement du substrat, après le traitement thermique de celui-ci, est effectuée sous une atmosphère contenant de l'oxygène ou sous une atmosphère pauvre en oxygène.

14. Substrat présentant une surface en métal, verre ou céramique qui est dotée d'une couche vitreuse à base de silicate, dans laquelle couche à base de silicate sont contenues des particules de pigment à interférences de taille inférieure à 6 µm, issues d'un broyage au mouillé.

15. Substrat à surface en métal, verre ou céramique, conforme à la revendication 14, **caractérisé en ce que** ce substrat est ou comprend une pièce métallique en acier, en acier spécial, en aluminium ou en laiton.

16. Substrat à surface en métal, conforme à la revendication 14 ou 15, **caractérisé en ce qu'**il s'agit d'une pièce métallique qui fait partie d'un véhicule, en particulier d'un véhicule terrestre, aquatique, aérien ou spatial et spécialement d'un dispositif d'échappement, ou partie d'un appareil ménager, d'un appareil de bureau, d'un récipient, d'un lampadaire, d'un meuble, d'un boîtier d'appareil électrique ou électronique, ou d'un appareil ou d'un dispositif appartenant au domaine technique médical ou à celui de la construction d'appareils ou d'installations, ou partie d'un bâtiment, d'une façade ou d'un revêtement de façade, d'une balustrade, d'un élément de paroi ou de sol, de garnitures, ou d'un appareil ou d'un article de sport ou de loisir, ou **en ce qu'**il s'agit d'un substitut en Eloxal.

17. Utilisation d'un substrat à surface en métal, verre ou céramique, conforme à l'une des revendications 14 à 16, à des fins de décoration ou de différenciation optique.

18. Composition d'encre d'impression, comprenant une composition de silicate et des particules de pigment à interférences de taille inférieure à 6 µm, obtenues par broyage au mouillé.
